# EUROPÄISCHE PATENTSCHRIFT

(11) **EP 1 487 651 B1**
(45) Veröffentlichungstag und Bekanntmachung des Hinweises auf die Patenterteilung: **07.12.2005**
(21) Anmeldenummer: 03712044.1
(22) Anmeldetag: 18.03.2003
(51) Int. Cl.: B60J 7/20

(54) **HECKDECKEL FÜR EIN CABRIOLET-FAHRZEUG**
REAR COVER FOR A CABRIOLET VEHICLE
CAPOT ARRIERE POUR VOITURE DECAPOTABLE

(30) Priorität: 25.03.2002 DE 10213337
(43) Veröffentlichungstag der Anmeldung: 22.12.2004
(73) Patentinhaber: CTS Fahrzeug-Dachsysteme GmbH, 74321 Bietigheim-Bissingen (DE)
(72) Erfinder: WAGNER, Tobias, 21149 Hamburg (DE)
(74) Vertreter: Müller, Gottfried
(86) Internationale Anmeldenummer: PCT/EP2003/002797
(87) Internationale Veröffentlichungsnummer: WO 2003/080377

(56) Entgegenhaltungen:
- DE-A- 10 051 616
- DE-A- 19 932 500
- DE-C- 4 445 944
- DE-C- 19 516 876
- DE-U- 29 916 002

## Beschreibung

Die Erfindung bezieht sich auf einen Heckdeckel für ein Cabriolet-Fahrzeug nach dem Oberbegriff des Anspruches 1.

In der Druckschrift DE 195 16 876 C1 wird ein derartiger Heckdeckel beschrieben, welcher einen Kofferraum des Fahrzeuges überdeckt und aus einem Tragrahmen und einem Deckelteil besteht, wobei der Tragrahmen gelenkig mit der Fahrzeugkarosserie und das Deckelteil gelenkig mit dem Tragrahmen gekoppelt ist. Die Drehgelenke von Tragrahmen und Deckelteil sind im vorderen und im hinteren Bereich des Heckdeckels angeordnet, so dass sowohl ein Aufschwenken der Hinterkante zum Beladen des Kofferraumes als auch ein Aufschwenken der dem Fahrzeuginnenraum zugewandten Vorderkante des Heckdeckels zum Freigeben eines Durchtritts für die Überführungsbewegung des verstellbaren Fahrzeugdaches zum Ablegen im Kofferraum möglich ist. Zum Öffnen des Kofferraumes verbleibt der Tragrahmen in seiner abgelegten Position und es wird lediglich das Deckelteil um seine dem Fahrzeuginnenraum benachbarte Drehachse aufgeschwenkt. Für die Ablage des Fahrzeugverdecks wird dagegen das Deckelteil mit dem Tragrahmen verriegelt und es werden beide Bauteile um die heckseitige Drehhachse aufgeschwenkt.

Der zweiteilig ausgeführte Heckdeckel, umfassend den Tragrahmen und das darauf gehaltene Deckelteil, besitzt ein vergleichsweise hohes Gewicht, welches von einem Stellelement zum Öffnen des Heckdeckels für die Überführung des Fahrzeugverdecks zwischen Schließ- und Ablagestellung angehoben werden muss. Dementsprechend muss auch das Stellelement verhältnismäßig groß dimensioniert sein.

Aus der Druckschrift DE 199 32 500 A1 ist ein Heckdeckel bekannt, der zum Beladen des Kofferraumes um eine vordere, dem Fahrzeuginnenraum benachbarte Viergelenkanordnung anzuheben ist und zum Ablegen des Fahrzeugdaches um eine hintere, dem Fahrzeugheck benachbarte Viergelenkanordnung zu öffnen ist. Im Bereich beider Viergelenkmechanismen sind jeweils Verriegelungseinrichtungen vorgesehen, über die jeweils ein Gelenk jedes Viergelenkmechanismus gelöst bzw. verriegelt werden kann, um die betreffende Seite des Heckdeckels anheben bzw. sicher arretieren zu können. Die Verriegelungsmechanismen sind unabhängig voneinander zu betätigen. Dies setzt im Falle einer automatischen Betätigung zwei separate Stellelemente voraus, die jeweils eine der Verriegelungseinrichtungen beaufschlagen. Im Falle einer manuellen Betätigung müssen die Verriegelungseinrichtungen von Hand geschlossen bzw. geöffnet werden.

Ein Heckdeckel, der sowohl um seine Vorderkante als auch um seine Hinterkante anzuheben ist, ist auch in der Druckschrift DE 299 16 002 U1 offenbart. Im Bereich der Vorderkante des Heckdeckels ist dieser über eine Viergelenkkinematik mit der Fahrzeugkarosserie zu verbinden, wohingegen der Heckbereich ein Drehgelenk aufweist, um das der Heckdeckel zum Ablegen des Fahrzeugdaches aufgeschwenkt wird. Zum sicheren Verschließen des Heckdeckels ist im Heckbereich ein Verriegelungsscharnier vorgesehen. Dieses Verriegelungsscharnier kann gelöst werden, damit der Heckdeckel zum Beladen des Kofferraumes aufgeschwenkt werden kann. Das Verriegelungsscharnier kann, wie allgemein aus dem Stand der Technik bekannt ist, entweder manuell oder mittels eines Stellgliedes ent- und verriegelt werden.

Um bei geöffnetem Kofferraum ein versehentliches Anheben des vorderen Bereiches des Heckdeckels zu verhindern, ist eine mechanische Zwangsführung vorgesehen, die von dem hydraulischen Stellglied in Arretierstellung gehalten wird, bei dessen Betätigung die Vorderkante des Heckdeckels zum Ablegen des Fahrzeugdaches angehoben wird.

Die Verriegelungseinrichtungen bzw. Gelenkanordnungen im vorderen und hinteren Bereich des Heckdeckels sind nicht miteinander verbunden bzw. in irgendeiner Weise funktionsgekoppelt. Das Stellelement hält lediglich die vordere Gelenkanordnung in einer Arretierstellung, beaufschlagt jedoch die hintere Gelenkanordnung bzw. das hintere Verriegelungsscharnier nicht.

Die nachveröffentlichte Druckschrift WO 03/059671 A1 offenbart einen Heckdeckel für ein Cabriolet-Fahrzeug, der über ein vorderes und ein hinteres Drehgelenk schwenkbar an die Fahrzeugkarosserie angekoppelt ist, wobei zur Anhebung des Heckdeckels um eine der beiden Drehachsen ein hydraulischer Stellzylinder vorgesehen ist, der einenends an der Fahrzeugkarosserie abgestützt ist und anderenends etwa in der Mitte des Heckdeckels an diesem angreift und diesen nach oben verstellt. Damit der Heckdeckel um eine seiner Drehachsen aufgeschwenkt werden kann, muss jeweils eines der Drehgelenke im vorderen und hinteren Heckdeckelbereich entriegelt werden; daraufhin schwenkt bei einer Betätigung des hydraulischen Stellzylinders die entriegelte Seite des Heckdeckels auf. Zur Steuerung der Öffnungsbewegung des Heckdeckels ist ein als Druckknopf ausgeführtes Steuerungselement vorgesehen, bei dessen Betätigung entweder eine benachbart zum vorderen Heckdeckelbereich angeordnete Verriegelungseinrichtung oder das heckseitige Drehgelenk entriegelt wird.

Über dieses Steuerungselement sind Steuerungssignale übertragbar, über die ein aktives Stellelement angesteuert wird.

Der Erfindung liegt das Problem zu Grunde, einen einfach aufgebauten Heckdeckel für ein Cabriolet-Fahrzeug zu schaffen, der sich durch ein geringes Gewicht auszeichnet. Es soll insbesondere auch eine automatische Betätigungseinrichtung zum Öffnen des Heckdeckels angegeben werden.

Dieses Problem wird erfindungsgemäß mit den Merkmalen des Anspruches 1 gelöst. Die Unteransprüche geben zweckmäßige Weiterbildungen an.

Der erfindungsgemäße Heckdeckel besitzt zwei Drehgelenke am vorderen, dem Fahrzeuginnenraum zugewandten Bereich und im Heckbereich, die beide unmittelbar am Heckdeckel angeschlagen sind. Hierdurch ist es möglich, auf einen Tragrahmen des Heckdeckels zu verzichten. Die gesamte Ausführung baut dadurch leichter, wodurch auch kleiner dimensionierte Anhebeeinrichtungen bzw. Stellelemente zur Betätigung des Heckdeckels eingesetzt werden können.

Des Weiteren ist vorgesehen, dass zumindest eine der beiden Verriegelungseinrichtungen ein aktiv einstellbares Stellelement umfasst, das einerseits ein Verriegelungsteil der Verriegelungseinrichtung beaufschlagt und das andererseits mit einem der Drehgelenke des Heckdeckels verbunden ist. Dieses Drehgelenk ist verstellbar zwischen einer Funktionsposition und einer Außerfunktionsposition ausgeführt, wobei in der Funktionsposition eine Drehbewegung des Heckdeckels relativ zur Fahrzeugkarosserie ermöglicht ist und in der Außerfunktionsposition der Schwenkbolzen des Drehgelenks außerhalb seiner Gelenkaufnahme liegt und somit keine Gelenkkräfte übertragen werden können. Das Stellelement, welches die Verriegelungseinrichtung verriegelt bzw. entriegelt, verstellt auch das Drehgelenk zwischen seiner Funktionsposition und seiner Außerfunktionsposition. In der Außerfunktionsposition des Drehgelenks kann die betreffende Seite des Heckdeckels angehoben werden. Auf diese Weise ist es möglich, mit nur einem aktiven Stellelement sowohl eine der beiden Verriegelungseinrichtungen auf einer Seite des Heckdeckels als auch das Drehgelenk auf der gegenüberliegenden Heckdeckelseite zu entriegeln bzw. zu verriegeln. In Abhängigkeit von der gewünschten Öffnungsbewegung des Heckdeckels wird die betreffende Verriegelungseinrichtung arretiert und das gegenüberliegende Drehgelenk entriegelt, woraufhin der Heckdeckel um die Schwenkachse des der Verriegelungseinrichtung zugeordneten Drehgelenks aufgeschwenkt werden kann. Umgekehrt wird beim Entriegeln der Verriegelungseinrichtung das gegenüberliegende Drehgelenk in seine Funktionsposition überführt, in welcher ein Verschwenken des Heckdeckels um die Schwenkachse dieses Drehgelenks möglich ist. Da zugleich die gegenüberliegende Verriegelungseinrichtung gelöst worden ist, kann nun der Heckdeckel in der entgegengesetzten Weise geöffnet werden.

In einer zweckmäßigen Ausführung ist vorgesehen, dass die Entriegelung des Verriegelungsteils und die Überführung des Drehgelenks in seine Funktionsposition bei einer Betätigung des Stellelements in die gleiche Stellrichtung erfolgen. Eine Bewegungsumschaltung des Stellelementes ist nicht erforderlich.

In einer vorteilhaften Weiterbildung ist vorgesehen, dass das verstellbare Drehgelenk über einen Seilzug mit dem aktiven Stellelement gekoppelt ist. Der Seilzug stellt eine konstruktiv einfache Lösung für die Kraftübertragung vom Stellelement auf das verstellbare Drehgelenk dar.

Das verstellbare Drehgelenk ist bevorzugt benachbart zu einer weiteren Verriegelungseinrichtung des Heckdeckels angeordnet, wobei die weitere Verriegelungseinrichtung automatisch oder manuell betätigbar ist. Für den Fall, dass diese weitere Verriegelungseinrichtung sich am Heckbereich befindet, kann eine manuelle Betätigung zum Öffnen des Kofferraumes ausreichend sein.

In einer alternativen Ausführung kann es auch angezeigt sein, auf eine zusätzliche Verriegelungseinrichtung zu verzichten und ausschließlich eine Verriegelung über das Drehgelenk in Funktionsposition vorzusehen. In Funktionsposition des Drehgelenks ist grundsätzlich nur eine Drehbewegung um die Schwenkachse dieses Drehgelenks möglich, nicht jedoch ein Anheben des Heckdeckels, so dass dem Drehgelenk in der Funktionsposition auch eine Verriegelungsfunktion zukommt.

In bevorzugter Weiterbildung ist vorgesehen, dass zur Überführung des verstellbaren Drehgelenks zwischen seiner Funktionsposition und seiner Außerfunktionsposition ein am Heckdeckel schwenkbar gelagerter Hebel vorgesehen ist, der einenends von dem Stellelement beaufschlagt wird und anderenends eine Lageraufnahme besitzt, die in Funktionsposition einen karosseriefesten Bolzen umgreift. Über die Hebelverhältnisse können die Hebelkraft bzw. der Hebelweg des verstellbaren Drehgelenks gesteuert werden. Gemäß einer weiteren zweckmäßigen Ausführung ist vorgesehen, dass der Hebel als translatorisch ausfahrbarer Aktuator ausgeführt ist, der insbesondere in der Funktionsposition des Drehgelenks beim Anheben der gegenüberliegenden Heckdeckelseite ausgefahren wird, um zusätzlich zu der Drehbewegung um die Schwenkachse des verstellbaren Drehgelenks auch eine Schwenkbewegung um eine Drehachse der zweiten, unmittelbar benachbarten Verriegelungseinrichtung zu ermöglichen. Außerdem wird durch die Ausfahrbewegung des Aktuators der Heckdeckel insgesamt weiter angehoben, wodurch ein größerer Durchtrittsbereich freigegeben wird.

Zum Anheben des Heckdeckels ist vorteilhaft eine Anhebeeinrichtung, insbesondere ein passives Federelement vorgesehen, welches zwischen den sich gegenüberliegenden Drehgelenken am Heckdeckel angreift. Der Heckdeckel wird durch die Anhebeeinrichtung an seiner entriegelten Seite angehoben und um die Schwenkachse des gegenüberliegenden Drehgelenkes aufgeschwenkt.

Weitere Vorteile und zweckmäßige Ausführungen sind den weiteren Ansprüchen, der Figurenbeschreibung und den Zeichnungen zu entnehmen. Es zeigen:
- Fig. 1: einen Heckdeckel für ein Cabriolet-Fahrzeug mit einem verstellbaren Fahrzeugverdeck, wobei der Heckdeckel in seiner geschlossenen Position dargestellt ist,
- Fig. 2: den Heckdeckel in geöffneter Position, in der die dem Heckbereich zugewandte Seite des Heckdeckels angehoben ist.
- Fig. 3: den Heckdeckel in geschlossener Position mit betätigtem Stellelement zur Überführung des heckseitigen Drehgelenks in seine Funktionsstellung,
- Fig. 4: eine Fig. 3 entsprechende Darstellung, jedoch mit dem Stellelement in einer weiter fortgeschrittenen Stellposition, in welcher die dem Fahrzeuginnenraum benachbarte Verriegelungseinrichtung entriegelt ist,
- Fig. 5: den Heckdeckel in angehobener Position zum Freigeben eines Durchtrittes für das Fahrzeugverdeck, in welcher die dem Fahrzeuginnenraum zugewandte Vorderkante des Heckdeckels angehoben ist.

In den folgenden Figuren sind gleiche Bauteile mit gleichen Bezugszeichen versehen.

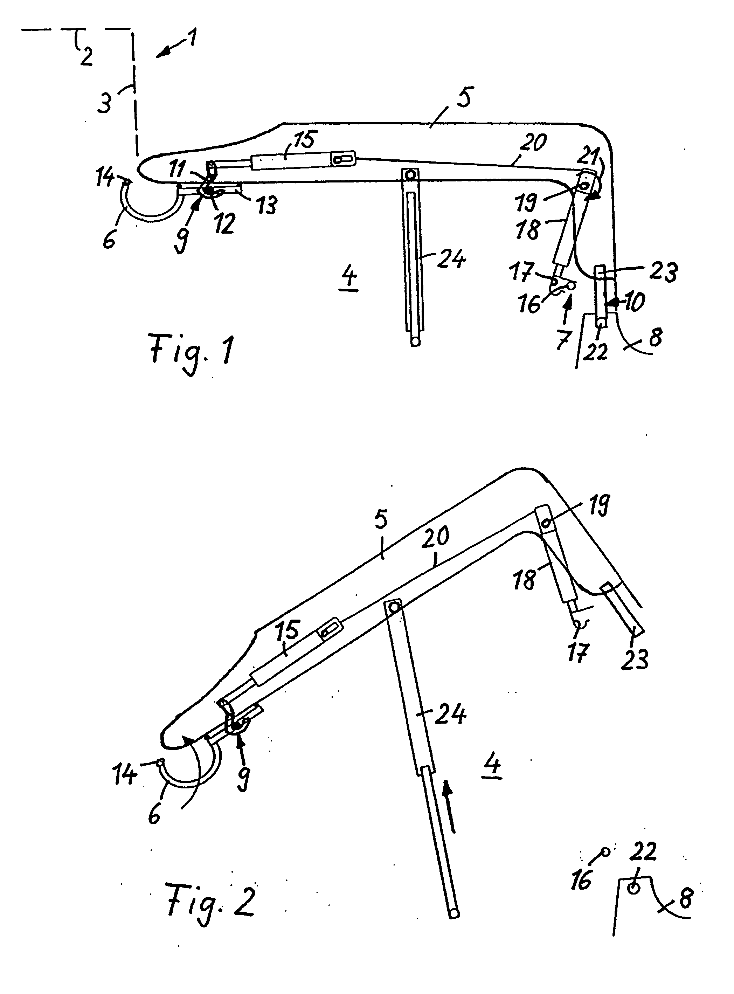

Bei dem Fahrzeugverdeck 1 gemäß Fig. 1 handelt es sich um ein Hardtop mit zumindest zwei starren Dachteilen 2 und 3, die zwischen der in Fig. 1 gezeigten, einen Fahrzeuginnenraum überdeckenden Schließposition und einer Ablageposition zu verstellen sind, in der die Dachteile in einem heckseitigen Kofferraum 4 bzw. einem Ablageraum innerhalb des Kofferraumes verstaut sind. Im Rahmen der Erfindung kommt alternativ zu einem Hardtop auch ein Softtop mit einem Verdeck-Bezugstoff und einem den Bezugstoff tragenden Verdeckgestänge in Betracht.

Der Kofferraum 4 ist von einem Heckdeckel 5 zu verschließen, der über ein vorderes, dem Fahrzeuginnenraum zugewandtes Drehgelenk 6 sowie ein hinteres, dem Fahrzeugheck benachbartes Drehgelenk 7 schwenkbar an die Fahrzeugkarosserie 8 angekoppelt ist. Das vordere Drehgelenk 6 und das hintere Drehgelenk 7 besitzen quer zur Fahrzeuglängsrichtung verlaufende Schwenkachsen und ermöglichen ein Aufschwenken des Heckdeckels 5 entweder um die Schwenkachse des vorderen Drehgelenks 6, woraufhin die Heckkante des Heckdeckels 5 angehoben wird, oder ein Aufschwenken um die Schwenkachse des hinteren Drehgelenks 7, woraufhin die dem Fahrzeuginnenraum benachbarte Vorderkante des Heckdeckels 5 angehoben wird.

Dem Heckdeckel 5 sind zwei Verriegelungseinrichtungen 9 und 10 zugeordnet, die jeweils benachbart zu dem vorderen Drehgelenk 6 bzw. dem hinteren Drehgelenk 7 angeordnet sind. Bei einem Anheben der Hinterkante des Heckdeckels 5 wird die hintere Verriegelungseinrichtung 10 entriegelt, bei einem Anheben der Vorderkante wird die vordere Verriegelungseinrichtung 9 entriegelt. Die vordere Verriegelungseinrichtung 9 umfasst einen schwenkbar am Heckdeckel 5 gelagerten Haken 11, welcher in Verriegelungsposition einen karosserieseitigen Bolzen 12 umgreift, der insbesondere an einem Schenkel 13 des Drehgelenks 6 angeordnet ist. Der Schenkel 13 ist Bestandteil des als Schwanenhalsscharnier ausgeführten vorderen Drehgelenks 6, welches um die karosseriefeste Schwenkachse 14 verschwenkt werden kann. Der Haken 11 der Verriegelungseinrichtung 9 ist über ein aktiv betätigbares Stellelement 15 zu verstellen, welches insbesondere als hydraulischer Stellzylinder ausgeführt ist und am Heckdeckel 5 gehalten ist. Der Stellzylinder 15 beaufschlagt ein Ende des Hakens 11 und verschwenkt dadurch diesen um seine Schwenkachse am Heckdeckel 5 zwischen Verriegelungs- und Entriegelungsstellung. Das am Heckdeckel 5 gehaltene Stellelement 15 kann gegenüber dem Heckdeckel translatorisch in Richtung seiner Wirklinie verschoben werden.

Das hintere Drehgelenk 7 ist verstellbar ausgeführt und zwischen einer Funktionsposition, in der das Drehgelenk seine normale Abstütz- und Drehfunktion ausüben kann, und einer Außerfunktionsposition zu verstellen, in der keine Kräfteübertragung im Drehgelenk möglich ist. Die Verstellbarkeit des hinteren Drehgelenks 7 wird dadurch erreicht, dass eine Lageraufnahme 17 des Drehgelenks zwischen einer einen karosseriefesten Achsbolzen 16 umgreifenden Wirkstellung und einer außerhalb des Achsbolzens 16 liegenden Stellung zu verstellen ist. Die Lageraufnahme 17 befindet an einem Ende eines Aktuators 18, der die Funktion eines Hebels hat und über eine Schwenkachse 19 drehbar am Heckdeckel 5 gelagert ist. Der Aktuator 18 ist zweckmäßig ebenfalls als steuerbarer, translatorisch ausfahrbarer Hydraulikzylinder ausgeführt.

Auf der der Lageraufnahme 17 gegenüberliegenden Seite greift am hebelähnlichen Aktuator 18 ein als Seilzug 20 ausgeführtes Übertragungsteil an, das anderenends mit dem ersten Stellelement 15 gekoppelt ist. Eine Stellbewegung des ersten Stellelements 15 wird über den Seilzug 20 auf den Aktuator 18 übertragen, woraufhin der Aktuator 18 um seine Schwenkachse 19 am Heckdeckel 5 verschwenkt wird. Anstelle eines Seilzuges kommt auch ein alternativ ausgeführtes Übertragungsteil in Betracht, beispielsweise eine Übertragungsstange.

Der Aktuator 18 wird von einem Federelement in Pfeilrichtung 21 um seine Schwenkachse 19 in Richtung Außerfunktionsstellung des Drehgelenks 7 beaufschlagt. Bei einem Betätigen des ersten Stellelementes 15 wird der Aktuator 18 entgegen der Kraft des Federelementes um seine Drehachse 19 verschwenkt, wodurch das Drehgelenk 7 von der Außerfunktionsposition in die Funktionsposition überführt wird, in welcher der karosseriefeste Achsbolzen 16 in der Lageraufnahme 17 am Aktuator 18 aufgenommen ist.

Die hintere, zweite Verriegelungseinrichtung 10 am Fahrzeugheck ist als Drehschloss ausgeführt und umfasst einen karosseriefesten Bolzen 22, an dem in Verriegelungsposition ein Schließbügel 23, der fest mit dem Heckdeckel 5 verbunden ist, arretierend eingreift. Zum Entriegeln wird der Schließbügel 23 vom Bolzen 22 gelöst. In Verriegelungsposition kann der Schließbügel 23 um den Bolzen 22 verschwenkt werden, ohne dass hierdurch die Verriegelung gelöst wird.

Zum Anheben des Heckdeckels ist eine Anhebeeinrichtung vorgesehen, die insbesondere als passives Federelement ausgeführt ist und im Ausführungsbeispiel als Gasdruckfeder 24 ausgebildet ist. Die Gasdruckfeder 24 ist an der Karosserie abgestützt und beaufschlagt den Heckdeckel 5 in einem zwischenliegenden Bereich zwischen den Drehgelenken 6 und 7.

In Fig. 2 ist der Heckdeckel 5 in angehobener Position mit aufgestellter Hinterkante dargestellt, in welcher der Heckdeckel um die Schwenkachse 14 des vorderen Drehgelenks 6 aufgeschwenkt ist, wodurch der Kofferraum 4 vom Heckbereich des Fahrzeuges aus zugänglich gemacht ist. Zum Aufschwenken wird die hintere Verriegelungseinrichtung gelöst, was entweder manuell oder automatisch erfolgen kann, so dass der Schließbügel 23 der hinteren Verriegelungseinrichtung in Außereingriff zum karosseriefesten Bolzen 22 steht. Auch das hintere Drehgelenk befindet sich in Außerfunktionsposition, in der der Achsbolzen 16 in Außereingriff zur Lageraufnahme 17 am Aktuator 18 steht. Sowohl das vordere Stellelement 15 als auch der hintere Aktuator 18 verharren in einer unbetätigten Position. Die Aufstellbewegung des Heckdeckels wird durch die Gasdruckfeder 24 unterstützt.

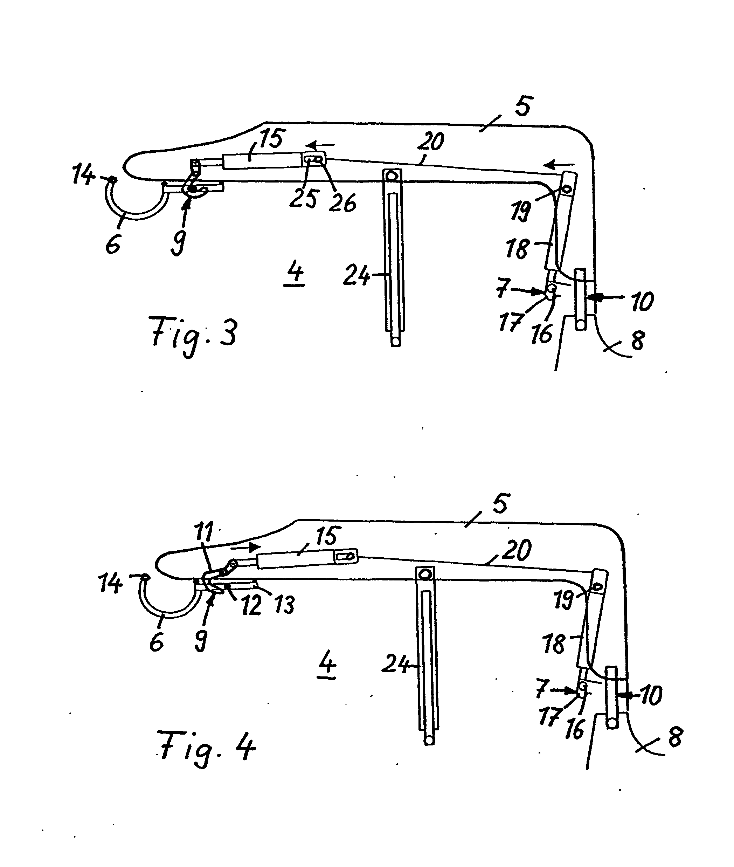

Die Fig. 3 bis 5 zeigen verschiedene Stadien beim Entriegeln und Anheben der Vorderkante des Heckdeckels 5 zur Freigabe eines Durchtrittbereiches für die Ablage der Dachteile 2 und 3 im Kofferraum 4 bzw. zum Herausheben der Dachteile aus dem Kofferraum. Um das Anheben der Vorderkante zu ermöglichen, wird gemäß Fig. 3 zunächst das erste Stellelement 15 betätigt. Das Stellelement 15 weist in einem der Heckseite zugewandten Abschnitt ein Langloch 25 auf, in welchem ein Befestigungsteil 26 des Seilzugs 20 geführt ist. Bei einem translatorischen Einziehen des Stellzylinders des Stellelementes 15 wird das Befestigungsteil 26 bis an die heckseitige Stirnseite des Langlochs 25 verschoben. Anschließend wird eine Zugkraft über den Seilzug 20 auf den hinteren Aktuator 18 übertragen, der daraufhin um seine Schwenkachse 19 entgegen der auf ihn wirkenden Federkraft verschwenkt wird. Durch die Schwenkbewegung des Aktuators 18 wird die Lageraufnahme 17 des verstellbaren, hinteren Drehgelenks 7 in eine den karosseriefesten Achsbolzen 16 aufnehmende Position verstellt, wodurch das Drehgelenk 7 seine Funktionsposition erreicht.

Im weiteren Verlauf des Einziehens des Stellzylinders des vorderen Stellelementes 15 wird auf die vordere Verriegelungseinrichtung 9 eine lösende Entriegelungskraft auf den Haken 11 ausgeübt, der daraufhin um seine heckdeckelseitige Schwenkachse aufschwenkt und den Bolzen 12 am Schenkel 13 des vorderen Drehgelenks 6 freigibt, s. Fig. 4. Die vordere Verriegelungseinrichtung 9 ist nun entriegelt und die Vorderkante des Heckdeckels 5 kann angehoben werden.

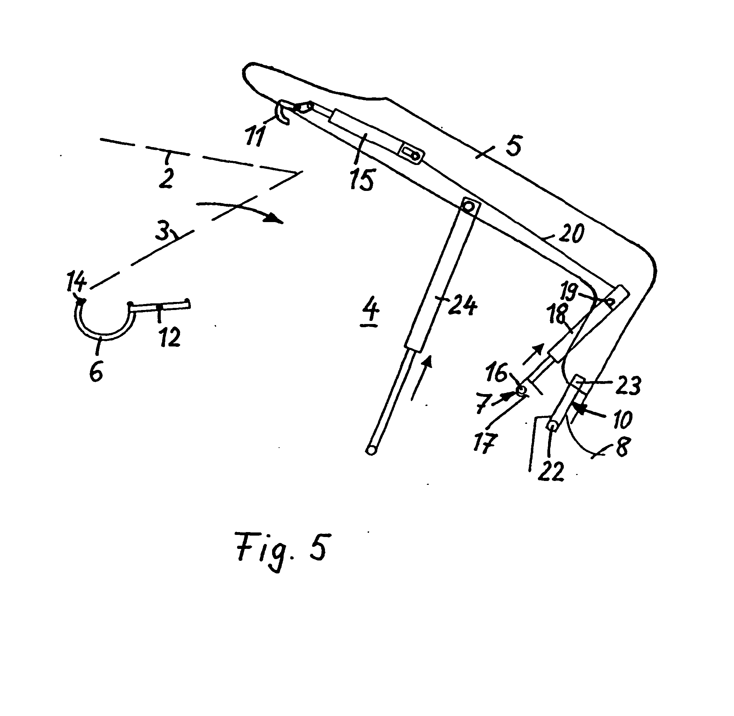

Das Aufschwenken des Heckdeckels 5 um die Schwenkachse im Achsbolzen 16 des hinteren Drehgelenks 7 und die damit einhergehende Anhebung der Vorderkante des Heckdeckels wird durch die Kraft der Gasdruckfeder 24 erreicht. Der Durchtritt für die Ablage des Fahrzeugdaches in den Kofferraum hinein bzw. für das Herausheben des Daches aus dem Kofferraum heraus ist nun freigegeben. Wie Fig. 5 auch zu entnehmen, wird beim Anheben der Vorderkante der Schließbügel 23 der hinteren Verriegelungseinrichtung 10 um den karosseriefesten Bolzen 22 verschwenkt. Diese Schwenkbewegung ist für das Anheben der Vorderkante des Heckdeckels 5 erforderlich, da der Heckdeckel sowohl über den Achsbolzen 16 als auch über den beabstandeten Bolzen 22 karosseriefest angeschlagen ist. Um ein Blockieren zu verhindern, wird der Stellzylinder des Aktuators 18 ausgefahren, so dass die heckdeckelseitige Schwenkachse 19, über die der Aktuator 18 mit dem Heckdeckel 5 verbunden ist, gegenüber dem karosseriefesten Achsbolzen 16 sowohl eine rotatorische als auch eine translatorische Bewegung ausführt. Dagegen führt der Heckdeckel gegenüber dem ebenfalls karosseriefesten Bolzen 22 der hinteren Verriegelungseinrichtung 10 eine ausschließlich rotatorische Bewegung durch.

Zum Schließen des Heckdeckels 5 wird das Stellelement des Aktuators 18 entgegen der Kraft der Gasdruckfeder 24 wieder eingezogen. Grundsätzlich ist es auch möglich, unabhängig von der Federkraft der Gasdruckfeder die Öffnungsbewegung zum Anheben der Vorderkante des Heckdeckels ausschließlich über den Aktuator 18 durchzuführen. Beim Schließen des Heckdeckels 5 aus seiner mit der Vorderkante angehobenen Position wird der Stellzylinder des vorderen Stellelements 15 wieder in seine ausgefahrene Position überführt, wodurch der Haken 11 in seine Verriegelungsstellung überführt wird. Außerdem wird die Spannung im Zugseil 20 aufgehoben, so dass der Aktuator 18 auf Grund der auf ihn wirkenden Federkraft wieder um seine heckdeckelseitige Schwenkachse 19 in der Weise verschwenkt wird, dass das hintere Drehgelenk 7 seine Außerfunktionsposition erreicht, in welcher der Achsbolzen 16 und die Lageraufnahme 17 in Außereingriff stehen.

## Patentansprüche

1. Heckdeckel für ein Cabriolet-Fahrzeug, der wahlweise um eine Schwenkachse (14) eines vorderen, dem Fahrzeuginnenraum zugewandten Drehgelenks (6) und um eine Schwenkachse (16) eines hinteren, dem Fahrzeugheck zugewandten Drehgelenks (7) verschwenkbar ist, mit einer Anhebeeinrichtung (24) zum Anheben des Heckdeckels (5) und mit jeweils einer lösbaren Verriegelungseinrichtung (9, 10) am vorderen Bereich und am Heckbereich zur Arretierung des Heckdeckels (5) an der Fahrzeugkarosserie (8), wobei zumindest eines der Drehgelenke (6, 7) zwischen einer Funktionsposition und einer Außerfunktionsposition zu verstellen ist,
**dadurch gekennzeichnet,**
**dass** zumindest eine der beiden Verriegelungseinrichtungen (9, 10) ein aktiv einstellbares Stellelement (15) umfasst, das ein Verriegelungsteil (11) der Verriegelungseinrichtung (9) zum Ver- und Entriegeln beaufschlagt und das außerdem mit dem verstellbaren Drehgelenk (7) wirkverbunden ist und dieses zwischen Funktionsposition und Außerfunktionsposition verstellt, wobei das Verriegelungsteil (11) und das Drehgelenk (7) an gegenüberliegenden Bereichen vorne bzw. hinten am Heckdeckel (5) angeordnet sind, und mit dem nur einen aktiven Stellelement (15) sowohl die Verriegelungseinrichtuug (9) als auch das Drehgelenk (7) auf der gegenüber liegenden Heckdeckelseite zu entriegeln bzw. zu verriegeln ist.

2. Heckdeckel nach Anspruch 1,
**dadurch gekennzeichnet,**
**dass** bei einer Betätigung des Stellelements (15) in eine Stellrichtung sowohl das Verriegelungsteil (11) entriegelt als auch das verstellbare Drehgelenk (7) in seine Funktionsposition überführt wird.

3. Heckdeckel nach Anspruch 1 oder 2,
**dadurch gekennzeichnet,**
**dass** das Stellelement (15) und das verstellbare Drehgelenk (7) in Fahrzeuglängsrichtung gesehen auf gegenüberliegenden Seiten des Heckdeckels (5) angeordnet sind.

4. Heckdeckel nach einem der Ansprüche 1 bis 3,
**dadurch gekennzeichnet,**
**dass** das verstellbare Drehgelenk (7) im Heckbereich angeordnet ist.

5. Heckdeckel nach einem der Ansprüche 1 bis 4,
**dadurch gekennzeichnet,**
**dass** das verstellbare Drehgelenk (7) über einen Seilzug (20) mit dem Stellelement (15) gekoppelt ist.

6. Heckdeckel nach einem der Ansprüche 1 bis 5,
**dadurch gekennzeichnet,**
**dass** das verstellbare Drehgelenk (7) benachbart zu der zweiten Verriegelungseinrichtung (10) angeordnet ist.

7. Heckdeckel nach einem der Ansprüche 1 bis 6,
**dadurch gekennzeichnet,**
**dass** die zweite Verriegelungseinrichtung (10) als Drehschloss ausgebildet ist.

8. Heckdeckel nach einem der Ansprüche 1 bis 7,
**dadurch gekennzeichnet,**
**dass** das verstellbare Drehgelenk (7) einen schwenkbar am Heckdeckel gelagerten Hebel (Aktuator 18) umfasst, an dessen einem Ende das Stellelement (15) angreift und dessen zweites Ende als Lageraufnahme (17) ausgeführt ist, in die in Funktionsposition ein karosseriefester Achsbolzen (16) eingreift.

9. Heckdeckel nach Anspruch 8,
**dadurch gekennzeichnet,**
**dass** der Hebel (18) von einem Federelement in die Außerfunktionsstellung beaufschlagt ist.

10. Heckdeckel nach Anspruch 8 oder 9,
**dadurch gekennzeichnet,**
**dass** der Hebel als translatorisch ausfahrbarer Aktuator (18) ausgebildet ist.

11. Heckdeckel nach einem der Ansprüche 1 bis 10,
**dadurch gekennzeichnet,**
**dass** die Anhebeeinrichtung (24) den Heckdeckel (5) in einem Bereich zwischen den gegenüberliegenden Drehgelenken (6, 7) des Heckdeckels beaufschlagt.

## Claims

1. Rear cover for a cabriolet vehicle, which is optionally pivotable about a pivot axis (14) of a front rotary joint (6) facing the vehicle interior and about a pivot axis (16) of a rear rotary joint (7) facing the vehicle rear, with a lifting device (24) for lifting the rear cover (5) and with a respective releasable locking device (9, 10) on the front region and on the rear region for locking the rear cover (5) on the vehicle body (8), with at least one of the rotary joints (6, 7) being displaceable between an operative position and an inoperative position, **characterized in that** at least one of the two locking devices (9, 10) comprises an actively adjustable actuating element (15) which acts upon a locking part (11) of the locking device (9) for locking and unlocking purposes and which is also operatively connected to the displaceable rotary joint (7) and displaces the latter between the operative position and inoperative position, the locking part (11) and the rotary joint (7) being arranged on opposite regions at the front and rear, respectively, of the rear cover (5), and it being possible for just just the one active actuating element (15) to be used to unlock and to lock both the locking device (9) and also the rotary joint (7) on the opposite side of the rear cover.

2. Rear cover according to Claim 1, **characterized in that**, when the actuating element (15) is actuated in an actuating direction, the locking part (11) is unlocked and the displaceable rotary joint (7) is transferred into its operative position.

3. Rear cover according to Claim 1 or 2, **characterized in that** the actuating element (15) and the displaceable rotary joint (7) are arranged on opposite sides of the rear cover (5), as seen in the longitudinal direction of the vehicle.

4. Rear cover according to one of Claims 1 to 3, **characterized in that** the displaceable rotary joint (7) is arranged in the rear region.

5. Rear cover according to one of Claims 1 to 4, **characterized in that** the displaceable rotary joint (7) is coupled to the actuating element (15) via a cable pull (20).

6. Rear cover according to one of Claims 1 to 5, **characterized in that** the displaceable rotary joint (7) is arranged adjacent to the second locking device (10).

7. Rear cover according to one of Claims 1 to 6, **characterized in that** the second locking device (10) is designed as a rotary lock.

8. Rear cover according to one of Claims 1 to 7, **characterized in that** the displaceable rotary joint (7) comprises a lever (actuator 18) which is mounted pivotably on the rear cover and on whose one end the actuating element (15) acts and whose second end is designed as a bearing receptacle (17) in which an axle pin (16) which is fixed on the body engages in the operative position.

9. Rear cover according to Claim 8, **characterized in that** the lever (18) is pressed by a spring element into the inoperative position.

10. Rear cover according to Claim 8 or 9, **characterized in that** the lever is designed as an actuator (18) which can be extended in a translatory manner.

11. Rear cover according to one of Claims 1 to 10, **characterized in that** the lifting device (24) acts upon the rear cover (5) in a region between the opposite rotary joints (6, 7) of the rear cover.

## Revendications

1. Capot arrière pour une voiture décapotable, qui peut pivoter de manière sélective autour d'un axe de pivotement (14) d'une articulation pivotante avant (6) tournée vers l'intérieur du véhicule, et autour d'un axe de pivotement (16) d'une articulation pivotante arrière (7) tournée vers l'arrière du véhicule, avec un dispositif de soulèvement (24) pour soulever le capot arrière (5) et avec à chaque fois un dispositif de verrouillage libérable (9, 10) au niveau de la région avant et de la région arrière pour bloquer le capot arrière (5) sur la carrosserie du véhicule (8), au moins l'une des articulations pivotantes (6, 7) pouvant être réglée entre une position fonctionnelle et une position non fonctionnelle,
**caractérisé en ce que**
au moins l'un des deux dispositifs de verrouillage (9, 10) comprend un élément de commande (15) ajustable de manière active, qui sollicite une partie de verrouillage (11) du dispositif de verrouillage (9) pour le verrouillage et le déverrouillage et qui est en outre en liaison coopérante avec l'articulation pivotante réglable (7) et règle celle-ci entre une position fonctionnelle et une position non fonctionnelle, la partie de verrouillage (11) et l'articulation pivotante (7) étant disposées sur des régions opposées en avant, respectivement en arrière sur le capot arrière (5), et où, avec ce seul élément de commande actif (15), le dispositif de verrouillage (9) ainsi que l'articulation pivotante (7) peuvent être déverrouillés ou verrouillés sur le côté opposé du capot arrière.

2. Capot arrière selon la revendication 1,
**caractérisé en ce que**
lors d'un actionnement de l'élément de commande (15) dans une direction de commande, la partie de verrouillage (11) est déverrouillée et l'articulation pivotante réglable (7) est transférée dans sa position fonctionnelle.

3. Capot arrière selon la revendication 1 ou 2,
**caractérisé en ce que**
l'élément de commande (15) et l'articulation pivotante réglable (7) sont disposés sur des côtés opposés du capot arrière (5), vu dans là direction longitudinale du véhicule.

4. Capot arrière selon l'une quelconque des revendications 1 à 3,
**caractérisé en ce que**
l'articulation pivotante réglable (7) est disposée dans la région arrière.

5. Capot arrière selon l' une quelconque des revendications 1 à 4,
**caractérisé en ce que**
l'articulation pivotante réglable (7) est accouplée par un câble Bowden (20) à l'élément de commande (15).

6. Capot arrière selon l'une quelconque des revendications 1 à 5,
**caractérisé en ce que**
l'articulation pivotante réglable (7) est disposée à proximité du deuxième dispositif de verrouillage (10).

7. Capot arrière selon l'une quelconque des revendications 1 à 6,
**caractérisé en ce que**
le deuxième dispositif de verrouillage (10) est réalisé sous forme de serrure pivotante.

8. Capot arrière selon l'une quelconque des revendications 1 à 7,
**caractérisé en ce que**
l'articulation pivotante réglable (7) comprend un levier (actionneur 18) monté de manière à pouvoir pivoter sur le capot arrière, avec une extrémité duquel l'élément de commande (15) vient en prise et dont la deuxième extrémité est réalisé sous forme de logement de palier (17) dans lequel un goujon d'axe (16) fixé à la carrosserie vient en prise dans la position fonctionnelle.

9. Capot arrière selon la revendication 8,
**caractérisé en ce que**
le levier (18) est sollicité par un élément à ressort dans la position non fonctionnelle.

10. Capot arrière selon la revendication 8 ou 9,
**caractérisé en ce que**
le levier est réalisé sous forme d'actionneur (18) pouvant être déployé en translation.

11. Capot arrière selon l'une quelconque des revendications 1 à 10,
**caractérisé en ce que**
le dispositif de soulèvement (24) sollicite le capot arrière (5) dans une région entre l'articulation pivotante opposée (6, 7) du capot arrière.
